# EUROPÄISCHE PATENTSCHRIFT

(11) **EP 2 120 305 B1**
(45) Veröffentlichungstag und Bekanntmachung des Hinweises auf die Patenterteilung: **27.11.2013**
(21) Anmeldenummer: 09006258.9
(22) Anmeldetag: 08.05.2009
(51) Int. Cl.: H02B 13/025

(54) **Elektrische Schalteinheit insbesondere für den Mittelspannungsbereich**
Electrical switching unit, in particular for medium voltage
Unité de commutation électrique, notamment pour le domaine de la moyenne tension

(30) Priorität: 17.05.2008 DE 102008024069
(43) Veröffentlichungstag der Anmeldung: 18.11.2009
(73) Patentinhaber: Schneider Electric Sachsenwerk GmbH, 93055 Regensburg (DE)
(72) Erfinder: Wahle, Arno, 14199 Berlin (DE); Summer, Raimund, Dr., rer., nat., 93186 Pettendorf (DE); Druxeis, Bernd, 93152 Nittendorf (DE)
(74) Vertreter: Dreiss

(56) Entgegenhaltungen:
- DE-U1- 9 102 513
- DE-U1-202005 000 973
- US-A1- 2004 114 289

## Beschreibung

Die Erfindung betrifft eine elektrische Schalteinheit für eine elektrische Schaltanlage insbesondere für den Mittelspannungsbereich.

Aus der DE 295 18 851 U1 ist eine Mittelspannungsschaltanlage bekannt, bei der ein gekapseltes elektrisches Funktionsmodul mit einem Druckentlastungselement versehen ist, über das ein bei einem Störfall entstehender Druckstoß in einen Druckentlastungskanal entweichen kann. Eine beispielsweise aus Metallspäne aufgebaute Dämpfpatrone ist an den Druckentlastungskanal angeschlossen, um die in dem Druckstoß enthaltene thermische Energie zu absorbieren. Auf diese Weise werden die heißen Gase des Druckstoßes abgeleitet und unschädlich gemacht. Die Dämpfpatrone und deren Anordnung innerhalb der Schaltanlage ist jedoch mit einem erhöhten Aufwand verbunden.

US 2004/0114289 A1 zeigt eine elektrische Installation für Mittelspannungsanlagen, wobei Gas aus einem Funktionsmodul über eine Öffnung in einen Kanal austreten kann. In dem Kanal ist auf der der Öffnung gegenüberliegenden Seite eine Schrägfläche angeordnet, die den aus der Öffnung austretenden Luftstrom ablenkt.

DE 91 02 513 U1 zeigt einen schachtartigen Aufbau, der an der oberen, von Schaltfeldern entfernt liegenden Seite mit einem gasdurchlässigen, hitzeabsorbierenden, mehrlagigen Metallgittergeflecht abgedeckt ist. Der schachtartige Aufbau ist überhalb von Klappen der Schaltfelder angeordnet.

DE 20 2005 000 973 U1 zeigt eine Leitvorrichtung für einen aus einer Schaltanlage austretenden Gasstrom. Die Leitvorrichtung umfasst mindestens einen Strömungskanal, der für aus einem Tank austretendes Gas jeweils eine Durchströmung auf geradem Weg zulässt.

Davon ausgehend hat sich die Erfindung die Aufgabe gestellt, eine elektrische Schalteinheit für eine elektrische Schaltanlage zu schaffen, die mit möglichst geringem Aufwand eine hohe Sicherheit hinsichtlich der aus dem Druckentlastungselement austretenden heißen Gase eines Druckstoßes erreicht.

Diese Aufgabe wird durch eine elektrische Schalteinheit nach dem Anspruch 1 gelöst.

Die erfindungsgemäße elektrische Schalteinheit weist ein gekapseltes elektrisches Funktionsmodul auf, das mit einem Druckentlastungselement versehen ist, über das ein bei einem Störfall entstehender Druckstoß entweichen kann. Dem Druckentlastungselement ist ein Diffusor zugeordnet, der insbesondere als Lochblech oder Lammellenblende oder Gitter oder dergleichen ausgebildet ist. Der aus dem Druckentlastungselement austretende Druckstoß trifft zumindest teilweise auf den Diffusor auf.

Durch den Diffusor verlieren die aus dem Druckentlastungselement austretenden heißen Gase ihre Energie. Weiterhin wird durch den Diffusor erreicht, dass die erste Druckwelle des von den heißen Gasen erzeugten Druckstoßes gedämpft wird und sich damit nur zeitlich verzögert ausbreitet. Auf diese Weise werden die heißen Gase des Druckstoßes auf eine sichere Weise unschädlich gemacht. Gleichzeitig erfordert der Diffusor nur einen geringen baulichen Aufwand.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

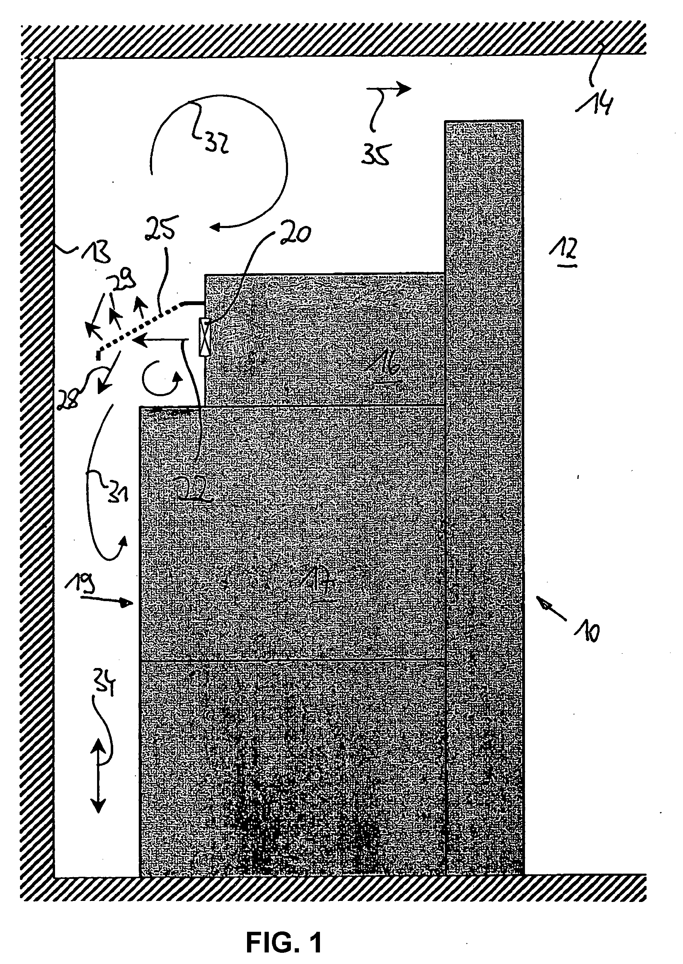

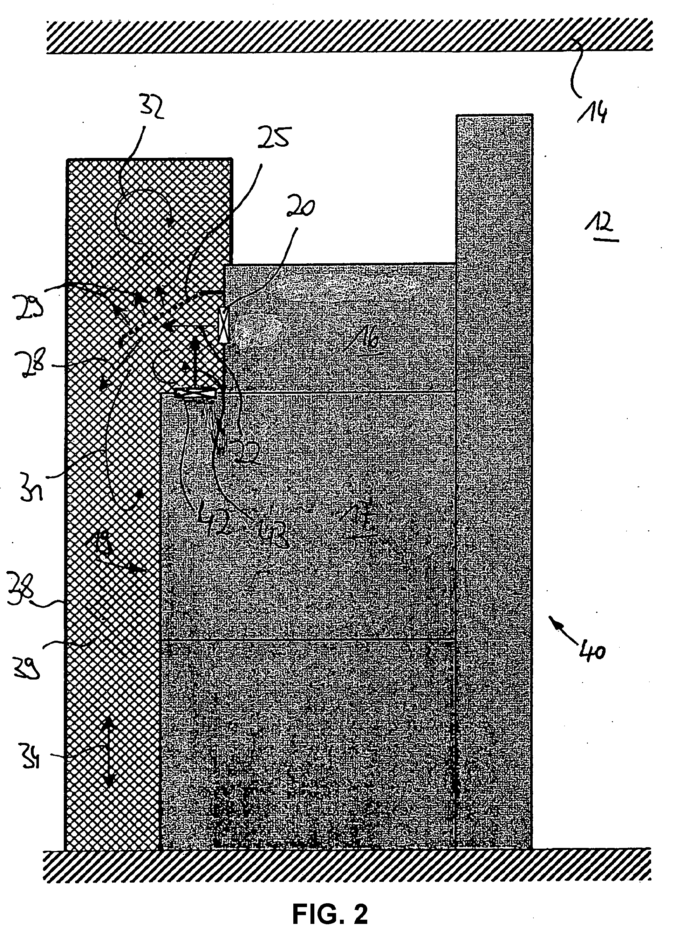

Figur 1 zeigt eine schematische Seitenansicht eines ersten Ausführungsbeispiels einer erfindungsgemäßen elektrischen Schalteinheit, und Figur 2 zeigt eine schematische Seitenansicht eines zweiten Ausführungsbeispiels einer erfindungsgemäßen elektrischen Schalteinheit.

In der Figur 1 ist eine elektrische Schalteinheit 10 dargestellt, die vorzugsweise im Mittelspannungsbereich zum Einsatz kommen kann. Mehrere derartige Schalteinheiten bilden eine sogenannte elektrische Schaltanlage.

Die Schalteinheit 10 steht in einem Raum 12, der unter anderem eine Wand 13 und eine Decke 14 aufweist. Die Schalteinheit 10 ist mit mindestens einem Funktionsmodul 16 versehen, das gasdicht gekapselt ist. In diesem Funktionsmodul 16 ist ein Gas mit einem Gleichdruck oder einem Überdruck enthalten. Insbesondere kann es sich dabei um ein Isolationsgas, beispielsweise SF6, handeln. In diesem Fall kann in dem Funktionsmodul 16 beispielsweise ein elektrischer Leistungsschalter oder ein elektrischer Trennschalter oder ein sonstiges elektrisches Schaltgerät enthalten sein. Andere Funktionsmodule 17 mit entsprechenden elektrischen Schaltgeräten können, müssen aber nicht vorhanden sein und können, müssen aber nicht gekapselt sein.

Auf der Rückseite 19 der Schalteinheit 10 ist in der Gehäusewand des gekapselten Funktionsmoduls 16 mindestens ein Druckentlastungselement 20 untergebracht, bei dem es sich beispielsweise um eine Klappe oder dergleichen handeln kann. Das Druckentlastungselement 20 ist dazu vorgesehen, dass ein Druckstoß aus dem Inneren des gekapselten Funktionsmoduls 16 nach außen entweichen kann. In der Figur 1 ist das Druckentlastungselement 20 in einer vertikalen Gehäusewand der Schalteinheit 10 enthalten. Es ist jedoch gleichfalls möglich, dass das Druckentlastungselement 20 in einer horizontalen oder schrägen Gehäusewand vorgesehen ist.

In einem Störfall, beispielsweise bei einem Kurzschluss, wird das Gas in dem gekapselten Funktionsmodul 16 in einer sehr kurzen Zeit stark erhitzt und dehnt sich daher sehr schnell und sehr stark aus. Dies ergibt einen Druckstoß, der durch ein Öffnen des Druckentlastungselements 20 nach außen abgeführt wird. In der Figur 1 ist der nach außen austretende Druckstoß durch einen Pfeil 22 gekennzeichnet.

Auf der Rückseite 19 der Schalteinheit 10 ist außen an der Gehäusewand ein Diffusor 25 angebracht. Bei dem Diffusor 25 kann es sich um ein Lochblech, eine Lamellenblende, ein Gitter oder dergleichen handeln. Wesentlich ist, dass der Diffusor 25 für den austretenden Druckstoß 22 einen teildurchlässigen Strömungswiderstand darstellt.

Der Diffusor 25 ist dem Druckentlastungselement 20 zugeordnet und in dessen unmittelbarer Nähe außerhalb der Schalteinheit 10 angeordnet. Weiterhin ist der Diffusor 25 derart angeordnet, dass der aus dem Druckentlastungselement 20 austretende Druckstoß 22 zumindest teilweise auf den Diffusor 25 auftrifft. Vorzugsweise ist der Diffusor 25 in Richtung des den Druckstoß 22 repräsentierenden Pfeils angeordnet.

Der Diffusor 25 kann im Hinblick auf den den Druckstoß 22 repräsentierenden Pfeil in einem Winkel ausgerichtet sein, und zwar kann der Winkel vorzugsweise in einem Winkelbereich um etwa 45 Grad zu dem Druckstoß 22 ausgerichtet sein. Gegebenenfalls kann der Diffusor 25 auch quer oder zumindest nahezu quer zu dem den Druckstoß 22 repräsentierenden Pfeil ausgerichtet sein.

Mit Hilfe des Diffusors 25 wird die erste Druckwelle oder "Bugwelle" des Druckstoßes 22 gedämpft. Die nachfolgend aus dem Druckentlastungselement 20 austretenden Gase des Druckstoßes 22 werden an dem Diffusor 25 zum Teil abgelenkt und zum Teil verwirbelt.

Die Ablenkung ist in der Figur 1 mit den Pfeilen 28, 29 angedeutet. Der Pfeil 28 repräsentiert dabei einen Teil des Gases, der nicht durch die Öffnungen des Diffusors 25 hindurchgetreten ist, sondern der an dem Diffusor 25 nur abgelenkt worden ist. Demgegenüber repräsentiert der Pfeil 29 einen Teil des Gases, der durch die Öffnungen des Diffusors 25 hindurchgetreten und auf diese Weise abgelenkt worden ist.

Die Verwirbelung ist in der Figur 1 mit den Pfeilen 31, 32 angedeutet. Der Pfeil 31 repräsentiert dabei denjenigen Teil des Gases, der nicht durch die Öffnungen des Diffusors 25 hindurchgetreten, sondern gemäß dem Pfeil 28 nur abgelenkt worden ist. Dieser Teil des Gases geht nach seiner Ablenkung in die genannte Verwirbelung über. In entsprechender Weise repräsentiert der Pfeil 32 denjenigen Teil des Gases, der durch die Öffnungen des Diffusors 25 hindurchgetreten ist, und der dann nach seiner Ablenkung gemäß dem Pfeil 29 in die genannte Verwirbelung übergeht.

Mit den Pfeilen 34, 35 ist in der Figur 1 schließlich angedeutet, dass sich die aus dem Druckentlastungselement 20 austretenden Gase nach ihrer Ablenkung und Verwirbelung in den freien Raum 12 strömen.

Durch den Diffusor 25 verlieren die aus dem Druckentlastungselement 20 austretenden heißen Gase ihre Energie. Der Diffusor 25 bewirkt, dass die aus dem Druckentlastungselement 20 austretenden heißen Gase des Druckstoßes 22 "diffus" werden. Insbesondere die Ablenkung und Verwirbelung haben einen hohen Energieverlust der Gase zur Folge. Weiterhin wird durch den Diffusor 25 erreicht, dass die erste Druckwelle des von den heißen Gasen erzeugten Druckstoßes 22 gedämpft wird und sich damit nur zeitlich verzögert ausbreitet. Die Zeitdauer bzw. der Weg, der erforderlich ist, bis sich der Druckstoß 22 "totläuft", wird damit durch den Diffusor 25 vermindert. Weiterhin werden Funken oder geschmolzene Metallteile, die zusammen mit dem Druckstoß 22 aus dem Druckentlastungselement 20 austreten, an dem Diffusor 25 abgelenkt und können damit nicht völlig frei in den Raum 12 austreten.

Der Diffusor 25 ist vorzugsweise ein separates Bauteil, das an die Schalteinheit 10 montiert werden kann. Vorhandene Schalteinheiten können damit auch noch nachträglich mit dem Diffuser 25 nachgerüstet werden.

Weiterhin kann ein einzelner Diffusor 25 auch mehreren Druckentlastungselementen 20 zugeordnet sein. Dabei können die Druckentlastungselemente 20 unterschiedlich ausgerichtet sein. Unter anderem dieser Unterschied wird nachfolgend anhand der Figur 2 erläutert.

In der Figur 2 ist eine elektrische Schalteinheit 40 gezeigt, die weitgehend der elektrischen Schalteinheit 10 der Figur 1 entspricht. Übereinstimmende Merkmale sind deshalb in den Figuren 1 und 2 gleich bezeichnet. Insoweit wird auf die vorstehende Beschreibung der elektrischen Schalteinheit 10 der Figur 1 verwiesen. Nachfolgend sind nur noch diejenigen Merkmale, Eigenschaften und Funktionen der elektrischen Schalteinheit 40 der Figur 2 beschrieben, die sich von der Figur 1 unterscheiden.

Die elektrische Schalteinheit 40 der Figur 2 steht in dem Raum 12, wobei dieser Raum 12 im Unterschied zur Figur 1 jedoch nicht durch die Wand 13 begrenzt ist. Statt dessen ist die Schalteinheit 40 der Figur 2 an ihrer Rückseite 19 mit einem Entlastungskanal 39 versehen, der durch eine weitere Gehäusewand 38 gebildet wird. Dieser Entlastungskanal 39 ist abgeschlossen und weist vorzugsweise keine Öffnungen oder dergleichen auf.

Der Diffusor 25 der Schalteinheit 40 der Figur 2 ist im wesentlichen in gleicher Weise angeordnet und ausgebildet, wie dies für die Schalteinheit 10 der Figur 1 bereits erläutert wurde. Aufgrund des vorhandenen Entlastungskanals 39 ist der Diffusor 25 in der Figur 2 jedoch nicht im Außenraum der Schalteinheit 40 angeordnet, sondern in dem von dem Entlastungskanal 39 gebildeten Raum.

Im Hinblick auf das Druckentlastungelement 20 ergibt sich damit im wesentlichen derselbe Ablauf, wie sich der Druckstoß 22 außerhalb der Schalteinheit 40 verhält. Im Unterschied zur Figur 1 kann sich bei der Figur 2 jedoch das heiße Gas nur innerhalb des Entlastungskanals 39 ausdehnen. Insoweit erfolgt in der Figur 2 nur ein weiter entferntes Abströmen des heißen Gases in Richtung des Pfeils 34, nicht jedoch in Richtung des Pfeils 35 der Figur 1.

Im Vergleich zur Figur 1 weist die Schalteinheit 40 der Figur 2 ein zweites Druckentlastungselement 42 auf, das auf der Rückseite 19 der Schalteinheit 40 angeordnet ist, und zwar dort in einer horizontalen Gehäusewand des Funktionsmoduls 17. Das Druckentlastungselement 42 ist benachbart und etwa im rechten Winkel zu dem Druckentlastungselement 20 angeordnet. Das Druckentlastungselement 42 ist, wie das Druckentlastungselement 20, dem Diffusor 25 zugeordnet. Das Druckentlastungselement 42 kann im wesentlichen gleichartig ausgebildet sein wie das Druckentlastungselement 20.

In einem Störfall wird das stark erhitzte und sich damit stark ausdehnende Gas durch ein Öffnen des Druckentlastungselements 42 aus dem Funktionsmodul 17 nach außen abgeführt. In der Figur 2 ist der nach außen austretende Druckstoß durch einen Pfeil 43 gekennzeichnet.

Aufgrund der Anordnung und Ausrichtung des Druckentlastungselements 42 und des Diffusors 25 zueinander ergibt sich ein im wesentlichen gleichartige Funktionsweise des Diffusors 25 im Hinblick auf den austretenden Druckstoß 43, wie dies bereits für den Druckstoß 22 bzw. das Druckentlastungselement 20 im Zusammenhang mit der Figur 1 erläutert worden ist.

Es versteht sich, dass das beschriebene zweite Druckentlastungselement 42 der Schalteinheit 40 der Figur 2 in entsprechender Weise auch bei der Schalteinheit 10 der Figur 1 vorhanden sein kann.

## Patentansprüche

1. Elektrische Schalteinheit (10, 40) für eine elektrische Schaltanlage insbesondere für den Mittelspannungsbereich, mit einem gekapselten elektrischen Funktionsmodul (16, 17), das mit einem Druckentlastungselement (20, 42) versehen ist, über das ein bei einem Störfall entstehender Druckstoß (22, 43) entweichen kann, **dadurch gekennzeichnet,**
**dass** dem Druckentlastungselement (20, 42) ein Diffusor (25) zugeordnet ist, der als Lochblech oder Lammellenblende oder Gitter ausgebildet ist, und der an der Schalteinheit (10, 40) angebracht ist,
**dass** der Diffusor (25) in einem Winkel von etwa 45 Grad zu dem Druckstoß (22, 43) ausgerichtet ist,
**dass** die aus dem Druckentlastungselement (20, 42) austretenden Gase des Druckstoßes (22, 43) zumindest teilweise auf den Diffusor (25) auftrifft,
**dass** ein Teil (29) des Gases durch die Öffnungen des Diffusors (25) hindurchtritt und auf diese Weise abgelenkt wird, und
**dass** ein Teil (28) des Gases nicht durch die Öffnungen des Diffusors (25) hindurchtritt, sondern an dem Diffusor (25) nur abgelenkt wird.

2. Elektrische Schalteinheit (10, 40) nach Anspruch 1, wobei die beiden Teile (29, 28) des Gases nach ihrer Ablenkung verwirbelt werden.

3. Elektrische Schalteinheit (10, 40) nach einem der vorstehenden Ansprüche, wobei der Diffusor (25) im Hinblick auf den Druckstoß (22, 43) derart angeordnet ist, dass die aus dem Druckentlastungselement (20, 43) austretenden Funken und geschmolzenen Metallteile nicht völlig frei nach außen austreten können.

4. Elektrische Schalteinheit (10, 40) nach einem der vorstehenden Ansprüche, wobei der Diffusor (25) mehreren Druckentlastungselementen (22, 42) zugeordnet ist.

5. Elektrische Schalteinheit (10, 40) nach einem der vorstehenden Ansprüche, wobei der Diffusor (25) als separates Bauteil ausgebildet ist.

6. Elektrische Schalteinheit (40) nach einem der vorstehenden Ansprüche, wobei ein Entlastungskanal (39) vorgesehen ist, und wobei der Diffusor (25) in dem von dem Entlastungskanal (39) gebildeten Raum angeordnet ist.

## Claims

1. Electrical switching unit (10, 40) for electrical switchgear particularly for medium voltage, having an encapsulated electrical functional module (16, 17) which is provided with a pressure-relieving member (20, 42) via which a pressure surge (22, 43) occurring at the time of a fault condition is able to escape, **characterised in that**
the pressure-relieving member (20, 42) has associated with it a diffuser (25) which takes the form of a perforated metal plate, an iris-type diaphragm or a grille and which is mounted on the switching unit (10, 40),
the diffuser (25) is oriented at an angle of approximately 45° to the pressure surge (22, 43),
at least some of the gases from the pressure surge (22, 43) which emerge from the pressure-relieving member (20, 42) impact on the diffuser (25),
a proportion (29) of the gas passes through the openings in the diffuser (25) and is deflected in this way, and
a proportion (28) of the gas does not pass through the openings in the diffuser (25) but is only deflected at the diffuser (25).

2. Electrical switching unit (10, 40) according to claim 1, **characterised in that** both proportions (29, 28) of the gas are made turbulent after their deflection.

3. Electrical switching unit (10, 40) according to either of the preceding claims, wherein the diffuser (25) is so arranged with respect to the pressure surge (22, 43) that the sparks and pieces of melted metal which emerge from the pressure-relieving member (20, 43) are not able to emerge to the exterior in an entirely free way.

4. Electrical switching unit (10, 40) according to one of the preceding claims, wherein the diffuser (25) has associated with it a plurality of pressure-relieving members (22, 42).

5. Electrical switching unit (10, 40) according to one of the preceding claims, wherein the diffuser (25) takes the form of a separate component.

6. Electrical switching unit (40) according to one of the preceding claims, wherein a relief duct (39) is provided and wherein the diffuser (25) is arranged in the space formed by the relief duct (39).

## Revendications

1. Unité de commutation électrique (10, 40) pour une installation de distribution électrique, en particulier pour le domaine de la moyenne tension, comprenant un module de fonctionnement électrique encapsulé (16, 17) qui est muni d'un élément de décompression (20, 42) par le biais duquel il est possible, en cas d'incident, de libérer un à-coup de pression (22, 43), **caractérisé**
**en ce qu'**il est associé à l'élément de décompression (20, 42) un diffuseur (25), réalisé sous la forme d'une plaque perforée ou d'un diaphragme à lames ou d'un grillage et qui est monté sur l'unité de commutation (10, 40),
**en ce que** le diffuseur (25) est aligné suivant un angle d'environ 45 degrés par rapport à l'à-coup de pression (22, 43),
**en ce que** les gaz de l'à-coup de pression (22, 43) s'échappant de l'élément de décompression (20, 42) viennent heurter au moins en partie le diffuseur (25),
**en ce qu'**une partie (29) du gaz passe à travers les ouvertures du diffuseur (25) et est ainsi déviée, et en ce qu'une partie (28) du gaz ne passe pas à travers les ouvertures du diffuseur (25) mais est seulement déviée au niveau du diffuseur (25).

2. Unité de commutation électrique (10, 40) selon la revendication 1, dans laquelle les deux parties (29, 28) du gaz sont mises à tourbillonner après leur déviation.

3. Unité de commutation électrique (10, 40) selon l'une des revendications précédentes, dans laquelle le diffuseur (25) est agencé, en ce qui concerne l'à-coup de pression (22, 43), de façon à ce que les étincelles qui s'échappent de l'élément de décompression (20, 43) et les pièces métalliques fondues ne puissent pas s'échapper totalement librement vers l'extérieur.

4. Unité de commutation électrique (10, 40) selon l'une des revendications précédentes, dans laquelle le diffuseur (25) est associé à plusieurs éléments de décompression (22, 42).

5. Unité de commutation électrique (10, 40) selon l'une des revendications précédentes, dans laquelle le diffuseur (25) est réalisé sous la forme d'un composant séparé.

6. Unité de commutation électrique (40) selon l'une des revendications précédentes, dans laquelle il est prévu un canal d'évacuation (39) et dans laquelle le diffuseur (25) est agencé dans l'espace formé par le canal d'évacuation (39).
